# EUROPEAN PATENT APPLICATION

(11) **EP 2 267 614 A1**
(43) Date of publication of application: **29.12.2010**
(21) Application number: 09425250.9
(22) Date of filing: 26.06.2009
(51) Int. Cl.: G06F 17/24

(54) **Process for saving multiple versions of web data collection of an identified user**

(71) Applicant: OneCube S.r.l., 27100 Pavia (IT)
(72) Inventor: Albertini, Michele, 20067 Paullo (MI) (IT)

(57) **Abstract**

The innovation consists in a system to manage data collection from an identified user, operating on a client, to a server web. Filling data trasmitting from client to server are organized into a logical entities structure. It allows to identify univocally specific user, specific form, specific field and its value and different version of the same field. Thanks to this innovation any partial filling of the form or different version of each field is saved and become available in the following session.

## Description

### Application field:

The application field of the present invention concerns that kind of application for which a user is connected to a server web to fill a form with personal data. As this kind of data are private data, usually there is a session time to fill out the form, this is in order to ensure safety. Web forms can regard many kind of web applications

### State of the art

One of the common way to collect data of web user, is tipically the system for which a client is connected to a web server by an identification process (for example a login process). At this point usually the user on the client side must fill out a form with his own data, in order to transmit the data themselves to the web server. The process can involve different kinds of data according to web application. It is the case of on line subscriptions or particulary on line applications as tickets booking and "home banking". Tipically data are characterized by the fact that they are personal or private data (for example data concerning a web wire transfer).

To ensure safety is commonly used a particular solution: a time limited work session. This is to avoid that filling data on the screen could be seen by other peple if the user move away; and also to avoid that other people could operate on client taking advantage of user absence.

The problem is that if the user wastes time during the filling of the form (for example he answers the phone), the session expires and he must fill again the whole form. Infact, data filled before the final submit are not recorded by the system. So we can say that often to ensure safety, by a time limited session, creates an inconvenience for the user. To increase session time duration is not an optimal solution because it means to affect safety instances.

By now there is not an optimal solution for this problem, as the matter of fact there are systems to save data that concern text editor which are related to different application field. Moreover, if any user has to change value of a compiled field, no trace of the old data is available in the following sessions.

The innovation of the present system is characterized by the fact that all the data filled before session time expires, are saved by the system itself and the user can find in the new session pre-loaded data.

Therefore different version of the form can be stored in the server. It's important to underline the difference between incomplete form and different version of the form. The first is a form in which at least one field is not filled, as we said the system pre-loads in the following session filled fields. The second takes origin when two forms of the same sort present at least one field filled with a different value, in this case there are two different versions of the same form.

### Brief description

It is a system to manage more efficiently web data collection in which a user, operating on client, transmit to a web server. In these cases commonly the user has to fill a form. Thanks to this innovation if the session time expires before the submitting, all the fields the user has already filled are saved by the system. The result is that user has not to fill the form from the beginning in the following session.

Therefore system can store a different version of the form for each user, it means a form in which at least one field contains a differnt value if compared with a previous filling of the user.

The Innovation is related to techonologies which are implemented to save field data of a specific form by a specific record strucuture. The process begin when the user enters the site (user operates on a client). The following step is user identification, typically by a login process. Consequently user is univocally identified by the client an by the server and two cases are possible:
- identified user enters a specific form for the first time. In this case the form data structure which user can see on client is replicated on the server. Obviously the form data structure will be a blank data structure (as we said user enters for the first time that specific form), it means that no field of the form is filled. Consequently there is only one data-flow: from the client to the server, this data-flow involves data user transmit when he starts to fill the form.
- Identified user has already entered the form and filled it. Also In this case the form data structure which user can see on client is replicated on the server. But it will not be a blank form, infact, the fields user has already filled will be pre-compiled fields. It means there are two flows of data, the first involves registered data of previous filling, from server to client, the second involves data of current filling, from client to server. User can fills blank fields and data will be saved. Therefore user can change one or more values field, consequently two different versions of the form will be stored on the server. In the case some data are substitude again a third version is saved.

### Brief description of drawings

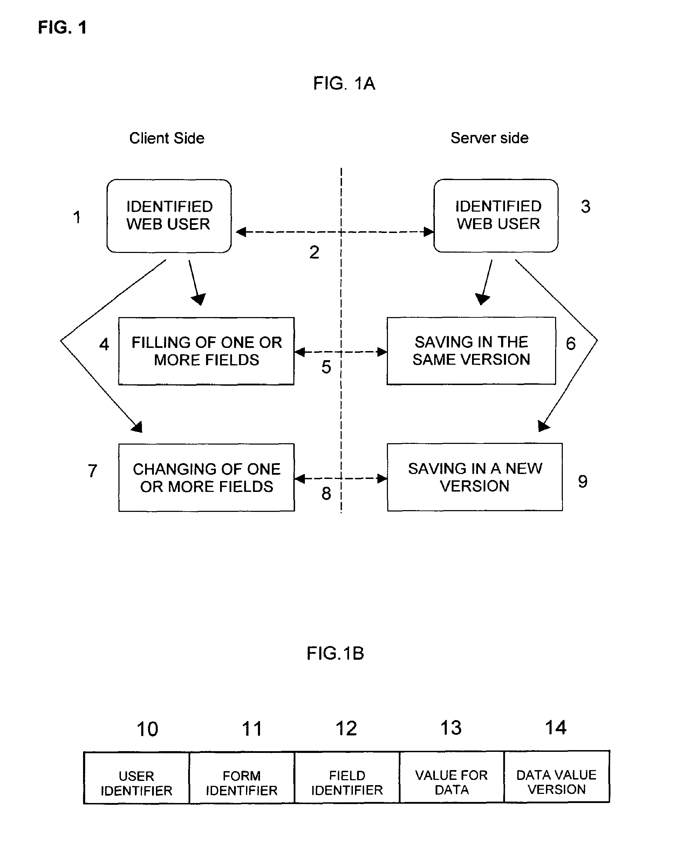

In fig. 1 is represented the logic data flow which takes place between client and server (fig. 1A) and the logical entities data structure to register data (fig. 1B).

### Detailed Description

As we said Fig.1A represents the logic data flow between client and server. Fig. 1A is divided into two sections by a dashed line: the section on the left represents client side operations, the section on the right represents server side operations. The process start with user identification on both client side 1A₍₁₎ and server side 1A₍₃₎. Univocal identification is represented by data flow 1A₍₂₎. Then user enters a specific form on client side, consequently on server side is replicated that specific form structure. This structure will be a blank structure if the user enters the form for the first time, on the contrary it will be a form in which some fields have pre-loaded data. User can start to fill the form as represented in fig. 1A₍₄₎. Fig. 1A₍₅₎ represents the second data flow between client and server, if the user enters the form for the first time it represents only data flow from client to server originated from the fact that user is filling the form. If the user has already entered and filled the form there will be a second data flow, from server to client to transmit pre-loaded data. Pre-loaded data are data user has filled the form with in a previous session. All filled fields are saved on the server as shown in fig. 1A₍₆₎.

It might be the user wants to change some data, for example he must change address-data, in this case he can retrieve the form and to fill address-fields again, fig. 1A₍₇₎. In fig. 1A₍₈₎ is shown the third data flow, this data flow will always be a bidirectional one: from server to client for load the values field user has already filled, from client to server to save the new version of the form. Finally the new version is saved on the server, fig. 1A₍₉₎.

In order to ensure that partial fillings and new version are correctly saved on the server and correctly pre-loaded on the client, the present invention involves a tecnique to manage data. The following logic strucure for registering data represents an embodiment of the invention:
- User identifier field fig 1B₍₁₀₎: it's a datum that allows to identify univocally a user. It will be a code to recognise registered users (who enters the site by a login). - Form identifier fig. 1B₍₁₁₎: it's a datum which allows to identify a specific form. Consequently the system recognises that a specific user has entered a specific form, if the user has previously entered that specific form, saved data must be loaded, if user fills new data, these ones must be saved, if user substitutes old data with new data, old data must be saved and new data must be saved in a new version.
- Field identifier 1B₍₁₂₎: it's a datum which allows to identify specific fields within a specific form.
- Value for data field fig. 1B₍₁₃₎: it' necessary to connect a specific value to a specific field of a specific form.
- Data Value version field 1B₍₁₄₎: it's necessary to connect any value of the same field to a specific version.

## Claims

1. A data management process on server side to register web user inputs related to web form filling **characterized in that** it's possible to identify univocally a specific field of a specific form of a specific web user in order to ensure that form fields previously filled in a previous session, will be pre-loaded in the following session. There fore the system ensures that every single version of every field is saved as different version on the server. Data structure for registering data is based on four key fields, user identifier (10), form identifier (11), field identifier (12) and data value version (14), plus one field for data value, value for data (13).

2. A data management process on server side to register web user inputs related to web form filling as claimed in claim 1, **characterized in that** data structure for registering data is based on four or more key fields plus one or more fields for data value.

3. A data management process on server side to register web user inputs related to web form filling as claimed in any of previous claim, **characterized in that** is possible to register, to save and to retrieve any different version of any fields.

4. A data management process on server side to register web user inputs related to web form filling, **characterized in that** data structure presents the same main features of any previous claims, and fields values are trasmitting from client to server one at a time or all together for a specific version
